# FASCICULE DE BREVET EUROPEEN

(11) **EP 0 960 379 B1**
(45) Date de publication et mention de la délivrance du brevet: **03.07.2002**
(21) Numéro de dépôt: 97952114.3
(22) Date de dépôt: 19.12.1997
(51) Int. Cl.: G06K 1/12, G06K 7/10, G06K 19/06, G09G 3/00

(54) **PROCEDE DE FABRICATION D'IMAGES POSSEDANT AU MOINS UNE PARTIE CODEE INDECELABLE A L'OEUIL NU**
ERZEUGUNGSVERFAHREN VON BILDERN MIT WENIGSTENS EINEM, MIT BLOSSEN AUGEN NICHT LESBAREN, KODIERTEN TEIL
METHOD FOR PRODUCING IMAGES HAVING AT LEAST A CODED PART INDISCERNIBLE TO THE NAKED EYE

(30) Priorité: 23.12.1996 FR 9615846
(43) Date de publication de la demande: 01.12.1999
(73) Titulaire: Brugot, Alain, 34480 St. Genies de Fontedit (FR); Barthelemy, Bernard, 76000 Rouen (FR)
(72) Inventeur: Brugot, Alain, 34480 St. Genies de Fontedit (FR); Barthelemy, Bernard, 76000 Rouen (FR)
(86) Numéro de dépôt international: FR9702360
(87) Numéro de publication internationale: WO9828704

(56) Documents cités:
- EP-A- 0 681 262
- US-A- 4 758 703
- US-A- 4 763 928
- US-A- 5 568 555

## Description

L'invention concerne la production à vitesse industrielle de séries d'images, toutes différentes les unes des autres. Elle concerne également la production de telles images dont la partie codée est indécelable à l'oeil nu mais susceptible d'être lue à grande vitesse. L'invention concerne plus particulièrement l'utilisation de ces images pour mettre en oeuvre un procédé de marquage de produits à des fins d'identification et/ou de suivi de leur mouvement et flux, ce procédé permettant, à cadences industrielles, la fabrication, la pose et la reconnaissance de libellés d'étiquettes en exemplaire unique.

### ART ANTERIEUR

Pour des raisons tant sociales qu'économiques, l'identification des produits est souvent nécessaire. En effet, il est fréquemment indispensable de reconnaître sans risque d'erreurs :
- le propriétaire d'un objet,
- l'auteur d'un objet unique,
- l'origine d'un objet manufacturé
- ...

Les applications directes de cette identification sont bien sûr la lutte contre le vol ou la contrefaçon, l'authentification d'oeuvres d'art etc.. Toutefois, sur un plan industriel et commercial, par exemple pour la gestion de stocks à flux tendu, la reconnaissance des produits peut aussi être utile à la gestion desdits flux : suivi géographique des produits, contrôle de leurs circuits de distribution...

Les enjeux économiques liés à l'identification des produits sont donc souvent importants, imposant de ce fait que les méthodes utilisées présentent une fiabilité suffisante. Toutefois, les moyens utilisés pour reconnaître les produits, manufacturés doivent non seulement être fiables mais aussi pouvoir suivre les rythmes de production.

Pour reconnaître les caractéristiques d'un produit, celui-ci doit être porteur d'une marque originale évitant toute confusion. Cette marque de reconnaissance peut être partie intégrante du produit ou lui être apposée pendant ou après sa fabrication ou sa réalisation.

Des méthodes de marquage des produits par pose d'étiquettes se sont révélées efficaces. Il s'agit particulièrement du MICRODOT et du VIGICODE.

Le procédé MICRODOT permet d'imprimer un certain nombre de paramètres sur un film découpé en pastilles de 2 mm de diamètre sur lesquelles sont imprimées 5 lignes de 15 caractères, couvrant une surface de 1 mm sur 5/10 mm. Les marquages effectués en utilisant ce procédé présentent l'inconvénient majeur de ne pas résister à l'abrasion ou au grattage et de ce fait exposent le produit à la falsification.

Le procédé VIGICODE a été mis au point pour remédier à ce problème. Il permet d'imprimer un texte composé de 6 lignes de 18 caractères, couvrant une surface de 5/10 mm sur 4/10 mm, sur un film par un procédé photographique. Ce texte étant inséré dans la masse de la pastille, il résiste à l'abrasion et/ou au grattage.

Ces deux systèmes permettent l'identification du propriétaire de l'objet. Bien que pratiqués et utiles, ils souffrent de plusieurs défauts :
- les textes imprimés sur les étiquettes bien que de taille relativement réduite peuvent, dans certains cas, altérer le produit qui les porte,
- le nombre total de caractères d'une étiquette est relativement peu élevé, limitant de ce fait le nombre de libellés différents, ou marques de reconnaissance, susceptibles d'être imprimés,
- l'impression d'une série d'étiquettes est effectuée sur la base d'une matrice unique, les étiquettes imprimées en grand nombre sont donc toutes identiques; ainsi, le MICRODOT et le VIGICODE ne permettent que d'identifier une famille de produits et non pas le produit lui même; cet inconvénient est majeur dans le sens où la marque des produits peut être reproduite par des personnes non autorisées et apposée sur des produits non authentiques. Le marquage perd alors tout son intérêt,
- ils ne proposent pas l'utilisation d'un code lisible à grande vitesse,
- les procédés d'impression sont tels que les libellés ne peuvent être lus que par contraste,
- malgré leur taille relativement réduite, les étiquettes produites par ces procédés et leur texte sont, avec attention, repérables à l'oeil nu ce qui hypothèque la protection.

On utilise aussi le code-barres pour marquer des produits. Son application la plus connue est celle servant à reconnaître les prix et à gérer les flux de produits de la grande distribution.

S'il offre une plus grande souplesse d'utilisation que le MICRODOT ou le VIGICODE, le code-barres présente toutefois l'inconvénient majeur d'être de taille relativement importante, particulièrement si l'on souhaite obtenir une quasi-infinité de libellés. En outre, il doit être orienté convenablement pour être lu. Sa lecture à grande vitesse n'a jamais pu être réalisée.

Le brevet US 4.763.928 décrit un procédé augmentant la fiabilité de l'identification de produits en marquant ceux-ci d'une multitude de micro-étiquettes toutes. porteuses des mêmes informations codées et/ou non codées apposées à des emplacements connus des seules personnes autorisées. Tous les produits d'une même série portent des étiquettes identiques placées aux mêmes endroits. Ce procédé présente l'inconvénient majeur d'être industriellement lourd si le nombre d'étiquettes apposées est grand mais peut être facilement détourné si ce nombre est petit puisque les étiquettes portent toutes la même information.

Le brevet US 4.758.703 décrit un dispositif et un procédé pour imprimer un code sur un produit par une technique « laser et cache ».

Le brevet US 5.568.555 décrit un nouveau système de codification de l'information en la traduisant sous forme de matrices de points de couleurs différentes et de nuances elles-mêmes différentes.

La demande de brevet EP-A-0681262 décrit un procédé de marquage de produits en leur appliquant plusieurs étiquettes de petites tailles mais visibles à l'oeil nu et porteuses chacune du même numéro de série donc facilement reproductibles par une personne non autorisée.

Pour l'identification des animaux, le procédé Indexel d'implantations sous l'oreille d'un transpondeur composé d'une très fine antenne en cuivre et d'une série de transistors ultra-miniaturisés regroupés dans une puce en silicium a été conçu pour pouvoir délivrer à la demande un numéro de 15 chiffres infalsifiable mis en mémoire et susceptible d'être lu par un lecteur de code-barres.

Cette méthode est difficilement transposable à un objet ou un produit de consommation courante car si la dissimulation nécessaire à une bonne dissuasion des vols est atteinte, en revanche l'implantation altère l'emballage donc son inviolabilité.

Les besoins industriels privilégient particulièrement la discrétion, la rapidité de réalisation et de lecture et la fiabilité du marquage des produits.

### OBJET DE L'INVENTION

La présente invention est réalisée pour remédier aux problèmes rencontrés avec les marquages de l'art antérieur. Plus particulièrement, elle a pour objet de satisfaire les critères suivants :
- le système de codage doit avoir une capacité suffisante pour garantir une quasi-infinité de libellés tous différents,
- le libellé doit s'inscrire sur une surface suffisamment petite pour que le marquage reste imperceptible,
- il doit être lisible sur 360°, le besoin d'orientation étant incompatible avec l'imperceptibilité du marquage,
- sa lecture doit être compatible avec les cadences industrielles, soit 5 à 9 lectures par seconde.

L'invention a également pour objet de mettre en oeuvre un procédé de marquage de produits dont la fiabilité est augmentée par :
- le caractère unique de l'image, c'est-à-dire du signe de reconnaissance, apposée,
- la résistance des images ainsi produites à l'abrasion et au grattage,
- les dimensions de la partie codée choisies de manière à ce que cette dernière ne soit pas décelable à l'oeil nu,
- l'enchaînement particulier des différentes étapes pour obtenir une sécurité maximale lors du marquage.

Le procédé de l'invention est défini à la revendication 1.

### BREVE DESCRIPTION DES DESSINS

La figure 1 est un diagramme représentant les dispositifs utilisés pour fabriquer une image selon l'invention.

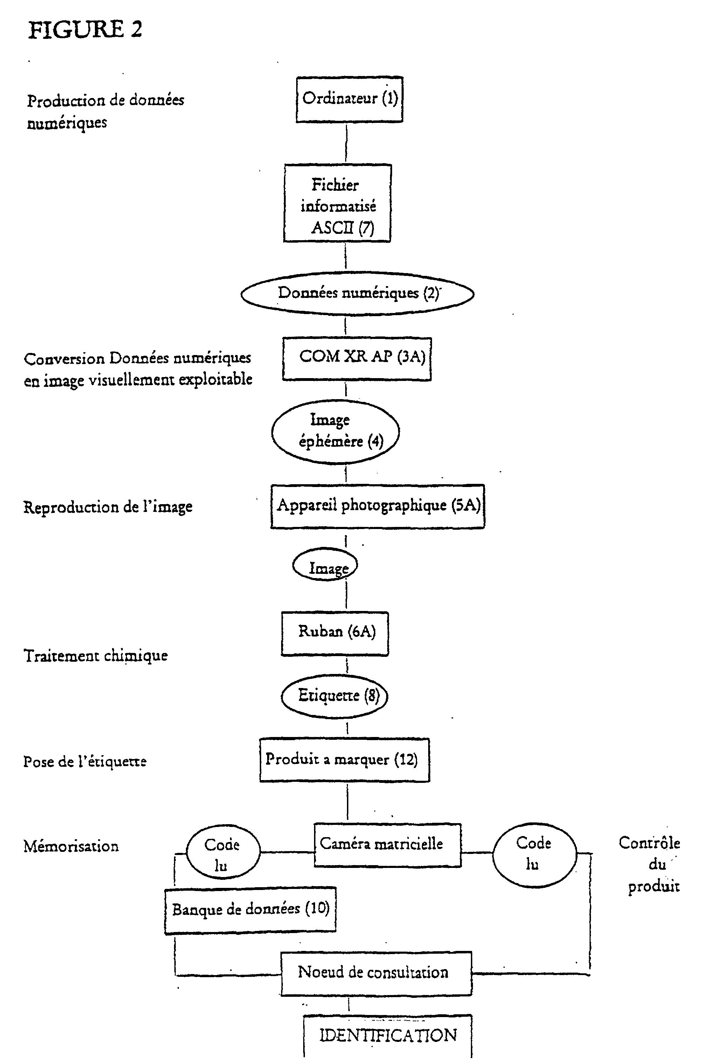

La figure 2 est un diagramme représentant les dispositifs et les étapes d'une réalisation d'un procédé de marquage selon l'invention.

### DESCRIPTION DE L'INVENTION

Dans les procédés de l'art antérieur, la création et l'impression des images sont telles qu'il n'est possible de réaliser qu'un seul signe de reconnaissance par groupe de produits. Dans le procédé selon l'invention, on utilise un dispositif capable en un temps relativement court, adapté aux cadences industrielles, de produire un grand nombre d'images toutes différentes et de les imprimer simultanément pour fabriquer des suites de signes de reconnaissance. La variété des caractères et leur nombre sont suffisants pour permettre la production d'une quantité quasi-infinie de libellés, tous uniques. Après impression, le motif généré disparaît.

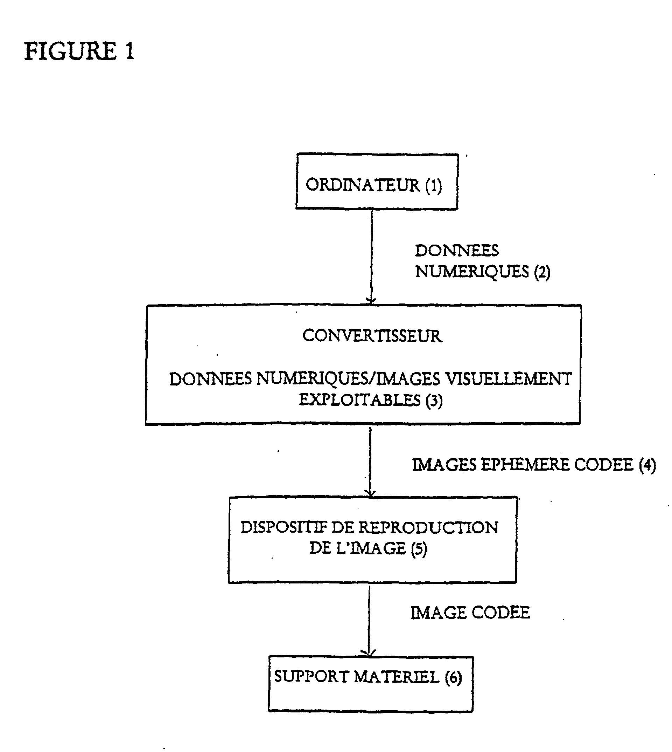

Pour permettre une telle opération, on réalise la combinaison originale de plusieurs dispositifs et caractéristiques techniques. Celle-ci est représentée sur la figure 1.

On associe l'utilisation d'un programme informatique d'un ordinateur (1), d'un dispositif de production d'images (3), tel que des tubes et écrans cathodiques et d'un dispositif (5) reproduisant cette image sur un support (6). Dans un premier temps les données (2) sont générées, soit de manière. aléatoire, soit par un algorithme, sous forme numérique de manière connue dans la technique. Elles correspondent à un code déterminé. Elles sont ensuite transmises à un dispositif (3) susceptible de convertir des données numériques (2) en images exploitables visuellement (4). Traduites sous cette forme, les données sont simultanément reproduites, par exemple par un procédé photographique, sur un support matériel (6) constitué par le produit à marquer lui même ou tout autre moyen tel qu'un film.

Une des caractéristiques de l'image produite par le dispositif mentionné ci-dessus est sa très courte durée de vie. En effet, la traduction visuelle des données numériques ne dure que 1/3 à 1/5 de seconde et disparaît dès la fin de son report sur le support pour être remplacée par la traduction suivante. Des cadences . industrielles de production d'images toutes différentes peuvent ainsi être atteintes en évitant toute possibilité de divulgation intempestive d'informations.

Un dispositif particulièrement adapté à la production d'images est un système de type COM (Norme française NF Z 43-042). Jusqu'à ce jour, ce matériel n'a été utilisé que pour la reproduction réduite de documents existants sur support papier. Dans le procédé selon l'invention, il est utilisé pour canvertir les données numériques en images visuellement exploitables sur écran cathodique.

L'image éphémère ainsi produite est ajustée aux dimensions souhaitées par un potentiomètre.

Selon une variante de l'invention, pour des raisons pratiques, le transfert d'une suite d'images est effectué sur une bande de manière à former un ruban d'images d'utilisation plus facile.

La reproduction de cette image sur un support matériel, à partir de la matrice ou image éphémère, se fait par différents procédés. L'impression photographique, telle que celle utilisée pour effectuer la micrographie est particulièrement adaptée. On utilise alors un film argentique sur un support de polyester, polyéthylène, polypropylène, verre, PVC etc. pour réaliser l'impression. L'image ainsi fixée peut ensuite subir divers traitements pour renforcer sa résistance à l'abrasion ou au grattage, faciliter sa pose ou son adhérence au produit etc.. On pose, par exemple, un film de contraste sur la face imprimée ou impressionnée. On peut également l'encoller (adhésif à froid ou thermocollage).

Cette reproduction peut aussi être obtenue par impression; photocomposition, sérigraphie ou tout procédé adapté et compatible avec la source d'information, c'est-à-dire le dispositif producteur d'images éphémères.

Selon une variante de l'invention, l'impression est réalisée ton sur ton. Pour parvenir à ce résultat, le code est imprimé avec une différence de nuance par rapport au support imperceptible à l'oeil, même après grossissement. Les codes ainsi transférés vont jusqu'au noir sur fond noir.

Selon une autre variante, certaines des parties visibles et identiques de chaque étiquette (par exemple les logotypes) sont réalisées par application d'un cache devant l'écran cathodique.

Selon une autre variante de l'invention, l'image ainsi formée présente plusieurs parties codées associées ou non à des parties non codées, variables ou non, et visibles à l'oeil nu.

Selon une autre variante de l'invention, le transfert de l'image de l'écran cathodique est effectué directement sur un produit, par exemple un produit manufacturé, traité au préalable de manière adaptée. L'image est alors formée par exemple par photosensibilisation de la surface de l'objet ou en la gravant directement par la technique « laser et cache ». Dans ce cas, le cache est constitué par l'image obtenue par utilisation du procédé décrit précédemment.

Un autre élément caractéristique de la combinaison de moyens permettant de réaliser des étiquettes répondant aux objets énoncés est la nature du code utilisé. Pour réaliser la partie indécelable de l'étiquette, ce code est un code à points ou code- matriciel. Ainsi, environ 500 caractères, susceptibles d'être convertis par exemple en code alpha-numérique, sont imprimés par mm². La lecture de ces codes est effectuée à grande vitesse (5 à 9 par seconde) et n'impose pas une orientation précise, d'ailieurs impossible à obtenir en raison de la taille de la partie codée, de l'objet à identifier.

La lecture de ces codes est effectuée par une caméra matricielle.

Les étiquettes fabriquées par l'association de ces différents moyens, c'est-à-dire des moyens de production de données numériques, de conversion de ces données et d'impression de leur version en image visuellement exploitables, sont particulièrement utiles pour effectuer le marquage de produits à des fins d'identification ou de suivi des mouvements et des flux.

Dans un procédé de marquage de ce type, l'étape suivant la production des images sur un support est la pose de l'étiquette portant le libellé de reconnaissance du produit. Elle est réalisée par tout moyen assurant l'adhérence de l'étiquette au produit à marquer. Elle est particulièrement effectuée en utilisant un dispositif, un poinçon, fabriqué spécialement pour ce procédé. Ce poinçon a la forme de l'étiquette à poser.

Selon une variante, on utilise un ruban d'étiquettes dont la découpe est effectuée par poinçonnage contrôlé du ruban par ce système.

Selon une autre variante de la présente invention, la résistance à l'abrasion est obtenue en posant la face imprimée de l'étiquette sur le produit. Dans ce cas, le libellé est préalablement imprimé à l'envers et sa lecture est effectuée par transparence.

Les étiquettes ainsi posées sont ensuite lues, par un moyen manuel ou automatique. Dans ce deuxième cas, on utilise une caméra matricielle pour valider leurs libellés et les associer aux caractéristiques du produit à identifier. Elles sont mémorisées par exemple dans une banque de données à laquelle il sera fait appel lors de la procédure d'identification d'un produit. Ce procédé est particulièrement efficace si les libellés sont lisibles automatiquement à grande vitesse.

Dans le cas d'un transfert du code ton sur ton, le système de lecture automatique est équipé d'un filtre spectrographique. Il permet ainsi d'analyser le code par différence de longueur d'onde. On peut ainsi lire des codes allant jusqu'au noir sur fond noir.

Selon une variante de ce procédé d'identification, la mémorisation du libellé de l'étiquette peut être effectuée lors de sa production avant ou pendant son impression.

La dernière étape de ce procédé d'identification de produits est la lecture et la reconnaissance du libellé porté. Cette lecture est telle qu'elle permet de mettre le signe lu en parallèle avec ceux mis en mémoire lors de la lecture. Un libellé lu dont l'équivalent n'est pas trouvé dans la banque de libellés mémorisés met en évidence l'absence d'authenticité d'un produit.

### EXEMPLE DE REALISATION

La présente invention a pour objet de permettre la réalisation d'un marquage en grande série de produits en limitant au maximum les risques de copie, de vol ou de destruction de ce marquage pour une plus grande efficacité.

Un des éléments caractéristiques du procédé selon l'invention est la production à grande vitesse d'images porteuses de nombreux caractères, ceux-ci étant eux mêmes suffisamment variés, de manière à pouvoir marquer un très grand nombre de produits (particulièrement des produits manufacturés) par un signe propre à chacun, à cadences industrielles.

Pour répondre à l'ensemble de ces impératifs, on crée, par exemple, un fichier informatisé ASCII (7). Ce fichier comprend les champs nécessaires à la réalisation de vues éphémères (3 à 5 par seconde). Ces vues sont obtenues en convertissant les données numériques (2) en images visuellement exploitables. Dans l'exemple de réalisation, on utilise un COM XR AP d'ANACOMP, ou tout appareil de type similaire, modifié pour traiter les films de 65 microns. Cet appareil (3A) produit des images codées (4) sur un écran cathodique.

Certaines zones sont éventuellement visibles, les autres étant réduites (jusqu'à 72 fois par rapport à la vision à l'oeil nu). Les libellés comportent un certain nombre de champs prédéfinis. Ces champs sont remplis par des caractères nombreux et variés. Les images sont donc toutes différentes les unes des autres. Elles comprennent un code matriciel et éventuellement des caractères alphanumériques, des dessins et/ou des codes-barres. Les libellés alphanumériques mais apparaissant sous forme d'un code matriciel sont générés soit par un algorithme de cryptage, alors détenu par le créateur du fichier, soit aléatoirement.

La seconde étape de ce procédé est la fabrication des images proprement dites. Eile est simultanée à la production des images. Selon une variante, on préfère réaliser un ruban d'images (6A) plutôt que des étiquettes individuelles. En effet, la production sous forme de ruban est plus rationnelle sur le plan industriel. Elle limite également le risque de perte, de vol etc..

Dans cette réalisation, on fabrique le ruban d'images à partir du fichier informatisé. On utilise alors un système photographique (5A) fixant l'image de l'écran cathodique ou laser avec réduction partielle ou totale de celle obtenue par un potentiomètre puis par un système optique. Le support sur lequel est fixée l'image éphémère est un film micrographique argentique (6A) lui même sur un support en polyester, polyéthylène, polypropylène, verre, PVC ou tout autre matériau permettant l'impression photographique.

Le traitement chimique est de type négatif (révélateur sans réexposition, fixateur, rinçage et séchage). L'image se trouve ainsi inversée (ce qui est habituellement opaque noir est ici transparent).

Les libellés sont soit noirs sur fond transparent, pour lecture sur un support clair, soit blancs, par traitement chimique lors du développement, pour lecture sur un support sombre, soit ton sur ton.

Les images sont séparées par un pavé de repérage obtenu par l'ajout d'un cliché de surimpression permettant un positionnement précis dans le module de pose décrit par la suite. Le pas entre deux étiquettes est ajusté par programmation.

Quand le signe de reconnaissance n'est pas directement imprimé sur l'objet, la dernière étape du procédé de marquage proprement dit est la pose de l'étiquette (8) sur le produit (12).

La découpe des étiquettes n'est pas faite préalablement. Il faut donc utiliser un dispositif qui assure cette découpe ainsi que l'adhérence définitive de l'étiquette à l'objet. Dans ce but, on utilise un poinçon réalisé spécialement pour la mise en oeuvre de l'invention. Il a la forme de l'étiquette à obtenir.

La pose se fait par descente contrôlée du poinçon, de façon à déposer l'étiquette poinçonnée sur le support. La pression utilisée est celle nécessaire à l'adhérence. Elle est supérieure à celle-ci si l'on souhaite incruster l'étiquette dans le support.

Le jeu poinçon-matrice est ajusté en fonction de l'épaisseur du ruban à poinçonner. L'épaisseur de la matrice est de l'ordre du millimètre pour limiter les frottements visqueux créés par une éventuelle accumulation d'adhésif entre le poinçon et la matrice.

Le poinçon peut être utilisé manuellement ou automatiquement. Dans le cas d'une utilisation automatique, le principe est le suivant :
- avance du ruban et positionnement à 0,05-0,1 mm par repérage par tout dispositif, par exemple optique, du signal séparant les images sur le ruban.
- descente du poinçon déclenchée par le positionnement, le maintien en position et la mise en contact du support avec le ruban d'images (on utilise alors un contacteur, une cellule photoélectrique ou autre), poinçonnage du ruban et pose de l'étiquette (8) sur le support (12) par limitation de la course du poinçon.

Après la pose, le libellé codé de l'étiquette est lu par une caméra matricielle (9) et mémorisé, par exemple dans une banque de données (10), pour que lors d'une identification on puisse le comparer aux signes portés par les produits contrôlés. La lecture de ces marqués de reconnaissance est réalisée à l'aide d'un microscope à inversion d'image ou par tout autre moyen de lecture automatique de codes à points. Dans le cadre de cet exemple, elle utilise particulièrement un système de lecture DOT CODE, une caméra CDD 1/2" haute résolution et un dispositif d'éclairage comportant un amplificateur 100W et une fibre annulaire. Un objectif spécifique (grossissement minimum de 100 fois avec miroir) est placé sur la caméra.

La dernière étape du procédé d'identification est celle de la lecture et de la comparaison de l'image portée par un produit à l'ensemble des libellés mis en mémoire lors de la fabrication des rubans d'images.

Un noeud de consultation (11) réalisé selon des procédés connus permet après relevé par les opérateurs autorisés des libellés d'étiquettes, la consultation de bases de données (10) interconnectées développées pour chaque application du procédé de marquage. Cette consultation permet le décryptage des libellés et par conséquent valide ou non l'authenticité de l'objet, indique sa provenance, son propriétaire etc..

Cet exemple de réalisation correspond au cas particulier de l'authentification de produits. D'autres réalisations sont adaptables à des utilisations différentes. On peut, par exemple, se limiter à la lecture des informations portées par le produit sans les comparer à celles mémorisées. Dans ce cas, les étapes du procédé sont sensiblement les memes à l'exception de la consultation du noeud (11).

L'invention concerne particulièrement la fabrication à cadences industrielles d'images porteuses d'une partie codée différente pour chacune d'elles, indécelable à l'oeil nu et susceptible d'être lue à grande vitesse. A partir des enseignements de cette invention, d'autres images sont conçues telles que des images formées par plusieurs parties codées, par une ou plusieurs parties codées et une ou plusieurs parties non codées, fixes ou variables... On peut aussi envisager d'apposer plusieurs étiquettes codées sur le même produit.

## Revendications

1. Procédé de fabrication à cadences industrielles d'images toutes différentes les unes des autres, possédant au moins une partie codée indécelable à l'oeil nu susceptible d'être lue à grande vitesse quelle que soit son orientation par rapport au dispositif de lecture, ledit procédé comprenant les étapes suivantes:
- un programme d'ordinateur génère, de manière aléatoire ou algorithmique, des données numériques correspondant à un libellé, par exemple alpha-numérique, déterminé;
- ces données numériques sont converties par un dispositif adapté en une image sur écran visuellement exploitable et éphémère;
- cette image est reportée sur un support matériel, le libellé du code indécelable à l'oeil nu de cette image se présentant sous ta forme d'un code à points.

2. Procédé selon la revendication 1, **caractérisé en ce que** le dispositif convertissant des données numériques en images visuellement exploitables sur écran cathodique est un matériel utilisé pour produire des microformes en sortie d'ordinateur.

3. Procédé selon la revendication 1, **caractérisé en ce que** le support matériel est un film synthétique, tel qu'un film micrographique argentique, traité pour permettre l'impression photographique de l'image et se présentant sous forme d'étiquettes distinctes ou celle d'un ruban.

4. Procédé selon la revendication 1, **caractérisé en ce que** l'image est reportée sur un support tel qu'un film par photocomposition, sérigraphie ou tout procédé compatible avec la source d'information.

5. Procédé selon la revendication 1 ou la revendication 4, **caractérisé en ce que** le code est transféré en ton sur ton sur le support.

6. Procédé selon la revendication 1 ou la revendication 5, **caractérisé en ce que** le support matériel est constitué par le produit à marquer.

7. Procédé selon l'une quelconque des revendications précédentes, **caractérisé en ce que** la partie codée de l'image est associée à une ou plusieurs parties non codées, visibles à l'oeil nu, différentes ou identiques sur chaque image.

8. Procédé selon la revendication 7, **caractérisé en ce qu'**au moins une des parties visibles, identique sur chaque étiquette, est réalisée en plaçant un cache devant l'écran cathodique.

9. Procédé de marquage de produits utilisant les images fabriquées selon les revendications 1, 2, 3, 4, 5, 7 et 8 comprenant les étapes consistant à :
- fabriquer une ou plusieurs images selon le procédé de l'une quelconque des revendications 1, 2, 3, 4, 5, 7 et 8, le support matériel étant par exemple un film synthétique;
- apposer une ou plusieurs images ainsi produites sur le produit à marquer, par exemple par un poinçon matrice les découpant à la forme;
- lire le ou les codes -apposés avec une caméra matricielle et les garder en mémoire;
- lire de nouveau ces codes lors de l'identification et les comparer à ceux mémorisés grâce à un noeud de consultation.

10. Procédé de marquage de produits selon la revendication 9, **caractérisé en ce que** la pose de l'image est remplacée par l'utilisation de celle-ci comme cache pour graver le produit à marquer, par exemple par le système « laser et cache ».

## Patentansprüche

1. Verfahren zur Herstellung von Bildern in industriellen Folge, die sich voneinander vollkommen unterscheiden, und die zumindest über einen codierten Teil verfügen, der mit freiem Auge nicht lesbar ist, jedoch von einem Lesegerät mit großer Geschwindigkeit, und egal wie das Bild zum Lesegerät ausgerichtet ist, gelesen werden kann wobei das genannte Verfahren in folgende Stufe unterteilt ist:
- ein Computerprogramm generiert zufällig oder nach einem Algorithmus digitale Daten, die einer festgelegten Formulierung, beispielsweise aus alphanumerischen Zeichen, entspricht;
- diese digitalen Daten werden von einer entsprechenden Vorrichtung in ein auf einem Bildschirm sicht- und auswertbares, flüchtiges Bild umgewandelt;
- dieses Bild wird auf einen materiellen Support übertragen, wobei die Formulierung des mit freiem Auge nicht lesbaren Codes dieses Bilds in Form eines Punktcodes dargestellt wird.

2. Verfahren gemäß dem Patentanspruch 1, welches **dadurch gekennzeichnet ist, dass** die Vorrichtung, die die digitalen Daten in Bilder umwandelt, die auf einem Kathodenbildschirm visuell auswertbar sind, ein Gerät ist, das zur Herstellung von Mikroformen am Computerausgang verwendet wird.

3. Verfahren gemäß dem Patentanspruch 1, welches **dadurch gekennzeichnet ist, dass** der materielle Support ein Kunststofffilm wie ein silberbeschichteter Mikrofilm ist, der so behandelt ist, dass er den Photodruck des Bildes ermöglicht, und der die Form von verschiedenen einzelnen Etiketten oder jene eines Bandes haben kann.

4. Verfahren gemäß dem Patentanspruch 1, welches **dadurch gekennzeichnet ist, dass** das Bild durch Lichtsatztechnik, Serigrafie oder durch Verfahren, die mit der Informationsquelle kompatibel sind, auf einen Support wie beispielsweise einen Film übertragen wird.

5. Verfahren gemäß dem Patentanspruch 1 oder dem Patentanspruch 4, welches **dadurch gekennzeichnet ist, dass** der Code Ton in Ton auf den Support übertragen wird.

6. Verfahren gemäß dem Patentanspruch 1 oder dem Patentanspruch 5, welches **dadurch gekennzeichnet ist, dass** der materielle Support aus dem zu markierenden Produkt besteht.

7. Verfahren gemäß einem der vorhergehenden Patentansprüche, welches **dadurch gekennzeichnet ist, dass** der codierte Teil des Bildes mit einem oder mehreren nicht codierten Teilen verbunden ist, die mit freiem Auge sichtbar, auf jedem Bild verschieden oder aber gleich sind.

8. Verfahren gemäß dem Patentanspruch 7, welches **dadurch gekennzeichnet ist, dass** zumindest einer der sichtbaren, und auf jeder Etikette identischen Teile hergestellt wird, indem man eine Schablone vor den Kathodenschirm anbringt.

9. Verfahren zur Markierung von Produkten, welches die gemäß den Patentansprüchen 1, 2, 3, 4, 5, 7 und 8 hergestellten Bilder verwendet, und jene Stufe beinhaltet, die darin bestehen, :
- ein oder mehrere Bilder gemäß dem Verfahren der Patentansprüche 1, 2, 3, 4, 5, 7 und 8 herzustellen, wobei der materielle Support beispielsweise ein Kunststofffilm ist;
- ein oder mehrere so hergestellte Bilder auf das zu markierende Produkt zu übertragen, beispielsweise durch ein Stanzwerkzeug, mithilfe dessen sie je nach Form zurechtgeschnitten werden können;
- den oder die aufgebrachten Codes mit einer Matrixkamera zu lesen und sie abzuspeichern;
- diese Codes bei der Identifizierung erneut zu lesen, und sie mit den abgespeicherten Codes durch einen Suchknoten zu vergleichen.

10. Verfahren zur Markierung von Produkten gemäß dem Patentanspruch 9, welches **dadurch gekennzeichnet ist, dass** das Anbringen des Bildes durch die Verwendung des selbigen als Schablone zum Gravieren des zu markierenden Produkts, beispielsweise durch das System "Laser und Schablone", ersetzt wird.

## Claims

1. A process for manufacturing at industrial rates images. each different from the others, having at least one coded part indiscernible to the naked eye capable of being read at high speed regardless of orientation in relation to the reading device, said process comprising the following steps:
- a computer program generates, randomly or by algorithm, digital data corresponding to a specific listing, e.g. alpha-numeric;
- this digital data is converted by a suitable device into an ephemeral, visually usable screen image;
- this image is transferred to a physical medium, its listing of the code, indiscernible to the naked eye, is presented in the form of a dot code.

2. Process according to claim 1 **characterized in that** the device that converts the digital data into visually usable images on a cathode screen is an equipment used to produce microform at the output of a computer.

3. Process according to claim 1 **characterized in that** the physical medium is a synthetic film, such as silvered micrographic film, treated to allow photographic printing of the image and presented in the form of separate labels or a strip.

4. Process according to claim 1 **characterized in that** the image is transferred to a medium such as film by photocomposition, silk-screening or any process compatible with the information source.

5. Process according to claim 1 or claim 4 **characterized in that** the code is transferred to the medium tint upon tint.

6. Process according to claim 1 or claim 5 **characterized in that** the physical medium consists of the product to be marked.

7. Process according to any of the preceding claims **characterized in that** the coded part of the image is associated with one or more, different or identical, un-coded parts visible to the naked eye on each image.

8. Process according to claim 7 **characterized in that** at least one of the visible parts, identical on each label, is produced by placing a mask in front of the cathode screen.

9. Process for marking products using the images produced according to claims 1, 2, 3, 4, 5, 7 and 8 comprising the following steps:
- producing one or more images in accordance with the process of any of claims 1, 2,3, 4, 5, 7 and 8, the physical medium being, for example, a synthetic film;
- affixing one or more images thus produced on the product to be marked, for example by a matrix stamp cutting them to shape;
- reading the affixed code or codes with a matrix camera and storing them in memory;
- re-reading these codes upon identification and comparing them to those stored in memory by means of a data retrieval node.

10. Product marking process according to claim 9 wherein exposing the image is replaced by using it as a mask to engrave the product to be marked, for example by the "laser and mask" system.
